# EUROPÄISCHE PATENTANMELDUNG

(11) **EP 2 402 078 A1**
(43) Veröffentlichungstag der Anmeldung: **04.01.2012**
(21) Anmeldenummer: 11004542.4
(22) Anmeldetag: 03.06.2011
(51) Int. Cl.: B01J 20/26, B60K 15/03, C08F 291/00, C08G 61/12, C08J 3/24, C08J 9/228, F17C 11/00, F17C 13/00

(54) **Polykondensationsnetzwerke**

(30) Priorität: 03.07.2010 DE 102010026044; 29.12.2010 DE 102010056372
(71) Anmelder: Merck Patent GmbH, 64293 Darmstadt (DE)
(72) Erfinder: Pahnke, Joerg, 64285 Darmstadt (DE); Lennert, Angela, 64289 Darmstadt (DE)

(57) **Zusammenfassung**

Die Erfindung betrifft ein Verfahren zur Herstellung von Polykondensationsnetzwerken aufgebaut aus ein oder mehreren bifunktionellen Friedel-Crafts-aktiven Monomeren. Desweiteren betrifft die Erfindung ausgedehnte Polykondensationsnetzwerke sowie deren Verwendung als Speichermedium für Gase und außerdem nanopartikuläre Polykondensationsnetzwerke sowie deren Verwendung als Membran, molekulares Trägersystem oder Trennmaterial für die Ionenaustauschchromatographie.

## Beschreibung

Die Erfindung betrifft ein Verfahren zur Herstellung von Polykondensationsnetzwerken aufgebaut aus ein oder mehreren bifunktionellen Friedel-Crafts-aktiven Monomeren. Desweiteren betrifft die Erfindung ausgedehnte Polykondensationsnetzwerke sowie deren Verwendung als Speichermedium für Gase und außerdem nanopartikuläre Polykondensationsnetzwerke sowie deren Verwendung als Membran, molekulares Trägersystem oder Trennmaterial für die Ionenaustauschchromatographie.

Die Speicherung von Gasen, insbesondere von Wasserstoff hat wachsende wirtschaftliche Bedeutung. Materialien, welche die Gase an einer großen Oberfläche adsorbieren können, erlauben die Konstruktion und den Bau von Gastanks ohne Hochdruck- oder Kryotechnik. Dadurch soll die Grundlage für eine Umstellung der heute mit flüssigen Kraftstoff betriebenen Fahrzeuge auf umweltfreundliche oder sogar umweltneutrale gasförmige Kraftstoffe geschaffen werden. Als gasförmige Kraftstoffe mit dem größten bestehenden und zukünftigen wirtschaftlichen und politischen Potential wurden Erdgas/Methan und Wasserstoff identifiziert.

Stand der Technik bei gasbetriebenen Fahrzeugen ist heute die Druckspeicherung in Stahlflaschen und in geringem Umfang in Compositflaschen. Die Speicherung von Erdgas in CNG-Fahrzeugen (Compressed Natural Gas) erfolgt bei einem Druck von 200 bar. Bei den meisten Prototypen von mit Wasserstoff betriebenen Fahrzeugen kommen Druckspeichersysteme mit 350 bar oder in geringem Umfang kryogene Flüssig-Wasserstoffsysteme mit -253°C (20 K) zum Einsatz.

Als Zukunftslösung werden bereits Drucksysteme für 700 bar entwickelt, die eine mit Flüssig-Wasserstoff vergleichbare volumenbezogene Speicherdichte aufweisen. Gemeinsame Merkmale dieser Systeme sind immer noch eine niedrige Volumeneffizienz und ein hohes Gewicht, was die Reichweite der Fahrzeuge auf ca. 350 km (CNG-Fahrzeuge) bzw. 250 km (Wasserstoff-Fahrzeuge) begrenzt. Ferner stellt der hohe Energieaufwand für die Verdichtung und insbesondere für die Verflüssigung einen weiteren Nachteil dar, der die möglichen ökologischen Vorteile gasbetriebener Fahrzeuge schmälert. Zusätzlich muss das Tankdesign der Speicherung bei tiefkalten Temperaturen (20K) durch eine extreme Isolation Rechnung tragen. Da sich eine vollständige Isolierung nicht erzielen lässt, muss man bei solchen Tanks mit einer erheblichen Leckagerate in der Größenordnung von 1-2% pro Tag rechnen. Unter den o.g. energetischen und wirtschaftlichen (Infrastrukturkosten) Aspekten gilt die Druckspeicherung in absehbarer Zukunft als die aussichtsreichste Technik für die gasförmigen Kraftstoffe Erdgas (CNG) und später Wasserstoff.

Folgende Materialklassen kommen aufgrund ihrer hohen spezifischen Oberflächen und ihrer ausgeprägten Mikroporosität grundsätzlich für die Erdgas/Methan- bzw. Wasserstoffspeicherung in Frage:
- Aktivkohlen (siehe Panella et al., Carbon 2005, 43, 2209-2214)
- Kohlenstoff-Nanoröhren (CNT) (siehe Schimmel et al., Chem. Eur. J. 2003, 9, 4764-4770)
- Zeolithe und andere Silikatmaterialien (siehe Jansen et al., Chem. Eur. J. 2007, 13, 3590-3595)
- Metallorganische Gerüstmaterialien (MOFs) (siehe Zao et al., Science 2004, 306, 1012-1015*)*
- Kovalentorganische Gerüstmaterialien (COF) (siehe EI-Kaderi et al., Science 2007, 316, 268-272)
- Polymere intrinsischer Mikroporosität (PIM) (siehe Budd et al., Phys. Chem. Chem. Phys. 2007, 9, 1802-1808)
- Hypervernetzte Polymere (HCP) (siehe Budd et al., Phys. Chem. Chem. Phys. 2007, 9, 1802-1808)

Die Materialien aus den oben erwähnten Materialklassen können zwar größtenteils die Speicherkapazität eines Tanks deutlich erhöhen, haben allerdings oft nur eine begrenzte chemische Beständigkeit. So sind viele dieser Materialien äußerst feuchtigkeitsempfindlich.

Üblicherweise werden hochporöse Polymermaterialien durch starke Vernetzung (Hypervernetzung) gequollener, leicht vernetzter Polymerpartikel, insbesondere basierend auf Polystyrol, hergestellt (siehe Davankov et al., Reactive & Functional Polymers 2002, 53, 193-203). Bei diesen sogenannten *Davankov-Netzwerken* wird grundsätzlich zwischen gelartigen und makroporösen Precursorpolymeren unterschieden (siehe Sherrington, Chem. Commun. 1998, 2275-2286), die über Suspensionspolymerisation in Wasser dargestellt werden und im trockenen Zustand als feindisperse Pulver vorliegen. Aufgrund ihres niedrigen Vernetzeranteils (unter 20 Mol %) besitzen die gelartigen Davankov-Netzwerke eine geringe mechanische Stabilität im gequollen Zustand, was ihre Anwendung einschränkt. Bei diesen Netzwerken lassen sich durch Hypervernetzung zwar recht hohe spezifische Oberflächen erzeugen, allerdings ist für Gasspeicherzwecke nicht alleine die Gesamtoberfläche entscheidend, sondern insbesondere der Anteil, der von Poren im (Ultra)mikroporenbereich von 0,5 bis 2 nm ausgeht. Somit ist die Speicherkapazität dieser bekannten Materialien für eine kommerzielle Nutzung noch nicht ausreichend, weswegen eine Erhöhung der Aufnahmefähigkeit für Methan und Wasserstoff ein wichtiges Forschungsziel darstellt.

Cooper et al, (Chem. Mater. 2007, 19, 2034-2048 sowie Adv. Mater. 2008, 20, 1916-1921) beschreiben ein Verfahren zur Herstellung von Polykondensationsnetzwerken, die spezifische Oberflächen von 600 bis 1904 m²/g (nach BET) aufweisen.

Aufgabe der vorliegenden Erfindung war es daher, ein Verfahren zur Herstellung von Polykondensationsnetzwerken bereitzustellen, so dass einerseits Polykondensationsnetzwerke entstehen, die eine höhere Speicherkapazität für Methan und Wasserstoff gegenüber herkömmlichen Materialien besitzen beziehungsweise den Strukturaufbau (d.h. spezifische Oberfläche und Porengeometrie) solcher Polykondensationsnetzwerke verbessern und andererseits Polykondensationsnetzwerke entstehen, die Verwendung als Membran, molekulares Trägersystem oder Trennmaterial für die Ionenaustauschchromatographie finden.

Überraschenderweise wurde jetzt gefunden, dass die Reaktionsbedingungen der Friedel-Crafts-Alkylierung durch Variation von Reaktionstemperatur, Lösungsmittel, Monomer : Katalysator-Verhältnis sowie der Reaktionszeit so verändert werden können, dass ausgedehnte Polymernetzwerke erhalten werden, die eine spezifische Oberfläche (nach BET) ≥ 2000 m²/g besitzen. Diese ausgedehnten Polykondensationsnetzwerke haben den weiteren Vorteil, dass sie robust sind, d.h. sie sind unempfindlich gegenüber Feuchtigkeit und thermisch stabil. Des Weiteren sind sie im Eintopfverfahren leicht herzustellen.

Außerdem wurde überraschenderweise gefunden, dass durch die vorher erwähnte Variation der Reaktionsbedingungen, nanopartikuläre Polykondensationsnetzwerke hergestellt werden können, die Partikelgrößen zwischen 1 und 1000 nm besitzen und somit als Membran, molekulares Trägersystem oder Trennmaterial für die Ionenaustauschchromatographie eingesetzt werden können. Gegenstand der vorliegenden Erfindung ist somit ein Verfahren zur Polykondensation, wobei ein oder mehrere aromatische bifunktionelle Friedel-Crafts-aktive Monomere in einem organischen oder anorganischen Lösungsmittel gelöst und mit einer Lewis-Säure (Katalysator) versetzt werden, dadurch gekennzeichnet, dass die Reaktion bei einer Temperatur ≤ 75°C durchgeführt wird.

Unter "Friedel-Crafts-aktiven Verbindungen" versteht man erfindungsgemäß aromatische Verbindungen, die unter katalytischer Wirkung einer Lewis-Säure (wie z.B. FeCl₃) über eine intermolekulare Vernetzungsreaktion zu Polykondensationsnetzwerken reagieren.

Die erfindungsgemäßen Monomere müssen bifunktionell sein, damit eine intermolekulare Netzwerkbildung erfolgen kann.

Vorzugsweise wird als aromatisches bifunktionelles Friedel-Crafts-aktives Monomer ein alkylhalogenid-bisubstituiertes Friedel-Crafts-aktives Monomer eingesetzt.

Vorzugsweise werden als Monomere alkylhalogenid-bisubstituierte Friedel-Crafts-aktive Verbindungen, noch bevorzugter Verbindungen der Formel I

Y-Ar-Z (I)

wobei
Ar aromatische Systeme wie Benzol-Reste, Biphenyl-Reste, kondensierte aromatische Ringsystem wie Naphthalin-Reste, Anthracen-Reste, Fluoren-Reste, Phenanthren-Reste, Tetracen-Reste, Pyren-Reste, wobei die aromatischen Systeme jeweils auch ein- oder mehrfach substituiert sein können.
Y und Z unabhängig voneinander Alkylhalogenid-Reste, vorzugsweise Alkylchlorid-Reste sein können, eingesetzt.

Die Kettenlänge der Alkylhalogenid-Reste beträgt von 1 bis 18, vorzugsweise 1 bis 3. Die Alkylhalogenid-Reste können auch verzweigt sein z.B. als 1,4-Bis-(1-chlor-1-methyl-ethyl)-biphenyl oder 1,4-Bis-(1-chlorethyl)-biphenyl.

Als Substituenten der aromatischen Systeme kommen Sulfongruppen, Alkylgruppen (von C1 bis C4 linear oder verzweigt) und Carbonsäuregruppen in Frage. Als Beispiele für Alkyl-substituierte Aromaten wären 4,4'-Bis-chloromethyl-2,3,5,6-tetramethyl-biphenyl oder 4,4-Bis-chloromethyl-2,5-dimethyl-biphenyl zu nennen. Als Beispiel für Carboxyl-substituierte Aromaten käme 4,4'-Bis-chloromethyl-6-methyl-biphenyl-3-carbonsäure in Frage und als Beispiel für einen mit einer Sulfongruppe substituierten Aromaten käme 4,4'-Bis-chloromethyl-6-methyl-biphenyl-3-sulfonsäure in Frage.

Bevorzugt sind Monomere mit mindestens zwei aromatischen Chlormethylfunktionen, vorzugsweise 4,4'-Bis(chlormethyl)-1,1'-biphenyl, 1,4-Bis(chlormethyl)benzol und/oder 9,10-Bis(chlormethyl)anthracen, besonders bevorzugt 4,4'-Bis(chlormethyl)-1,1'-biphenyl (BCMBP) eingesetzt.

Als zentrale Reaktion zur Herstellung von Polykondensationsnetzwerken dient erfindungsgemäß die bekannte Friedel-Crafts-Alkylierung. Hierbei erfolgen Aufbau und Vernetzung des Polymers in einem Schritt mittels einer Polykondensationsreaktion (siehe Cooper et al., Chem. Mater. 2007,19, 2034-2048).

Die über diese Polykondensation erhaltenen Materialien können auch als Fällungspolymere bezeichnet werden, da die wachsenden, stark vernetzten

Ketten ab einem bestimmten Polymerisationsgrad einer Phasentrennung unterliegen und ausfallen.

Als Katalysator der Reaktion können erfindungsgemäß Lewis-Säuren wie FeCl₃, AlCl₃, ZnCl₂ oder SnCl₄ oder deren Gemische eingesetzt werden. Erfindungsgemäß bevorzugt sind FeCl₃ oder AlCl₄, wobei FeCl₃ besonders bevorzugt ist.

Es ist wichtig ein Lösungsmittel zu verwenden, welches einerseits das entstehende Polymer ausreichend löst (aufquillt) und andererseits inert gegenüber der Friedel-Crafts-Reaktion ist (keine Aromaten). Als geeignetes organisches Lösungsmittel wird bevorzugt ein chloriertes Lösungsmittel noch bevorzugter 1,2-Dichlor-methan verwendet, aber auch die Verwendung von 1,2 Dichlor-ethan oder Hexan ist möglich. Als Lösungsmittel können erfindungsgemäß auch Salzschmelzen, vorzugsweise ionische Flüssigkeiten auf der Basis von substituierten Imidazolin-, Pyrrolidinium- und Pyridiniumsalzen verwendet werden.

Ein weiterer Gegenstand der vorliegenden Erfindung sind ausgedehnte Polykondensationsnetzwerke erhältlich durch Umsetzung eines oder mehrerer aromatischer, bifunktioneller Friedel-Crafts-aktiver Monomere mit einer Lewis-Säure bei einer Temperatur ≤ 75°C, vorzugsweise ≤70 °C, noch bevorzugter ≤60 °C, am bevorzugtesten zwischen 30 und 50 °C. Bevorzugt erfolgt die Reaktion bzw. Umsetzung bei einem Molverhältnis Monomer: Lewis-Säure von 1:4 bis 10:1, bevorzugt 1:3 bis 5:1, besonders bevorzugt 1:2 bis 2:1.

Vorzugsweise beträgt die Reaktionszeit ≤ 6 Stunden, noch bevorzugter etwa 5 Stunden.

Die erfindungsgemäßen Polykondensationsnetzwerke fallen in der Regel als feindisperse braune Pulver an.

Der Anteil an Mikroporenvolumen (bezogen auf das Gesamtporenvolumen) liegt bevorzugt zwischen 50 bis 90%.

Die Größe der Poren sowie der Porenverbindungen lässt sich erfindungsgemäß über die Syntheseparameter steuern. Der Spielraum zur Einstellung der Poren ist hierbei wesentlich größer als bei ähnlichen anorganischen Systemen wie z.B. den Zeolithen.

Der Anteil an Mikroporenvolumen (bezogen auf das Gesamtporenvolumen) bei den erfindungsgemäßen Polykondensationsnetzwerken liegt zwischen 50 bis 90 %. Neben den Mikroporen scheinen im Material auch Mesoporen vorhanden zu sein.

Die spezifische Oberfläche, wie sie gemäß BET (Brunauer, Emmett, Teller, J. Am. Chem. Soc 1938, 60, 309) nach der sog. 5-Punkt-Methode, Fa. Micromeritics, ASAP 2420 berechnet worden ist, beträgt für die erfindungsgemäßen Polykondensationsnetzwerke ≥2000 m²/g. Bevorzugt liegt sie zwischen 2400 m²/g und 3000 m²/g.

Gegenüber den bekannten Polykondensationsnetzwerken (hergestellt aus 100% BCMBP-Monomer, siehe Cooper et al. Adv. Mater. 2008, 20, 1916-1921) mit gravimetrischen Speicherdichten bis 5.5 mmol/g Methan (bei 35 bar), konnten erfindungsgemäß nach dem gleichen Verfahren gravimetrische Speicherdichten > 6 mmol/g Methan, vorzugsweise etwa 7 mmol/g Methan (35 bar Druck, siehe Beispiel 1) erreicht werden.

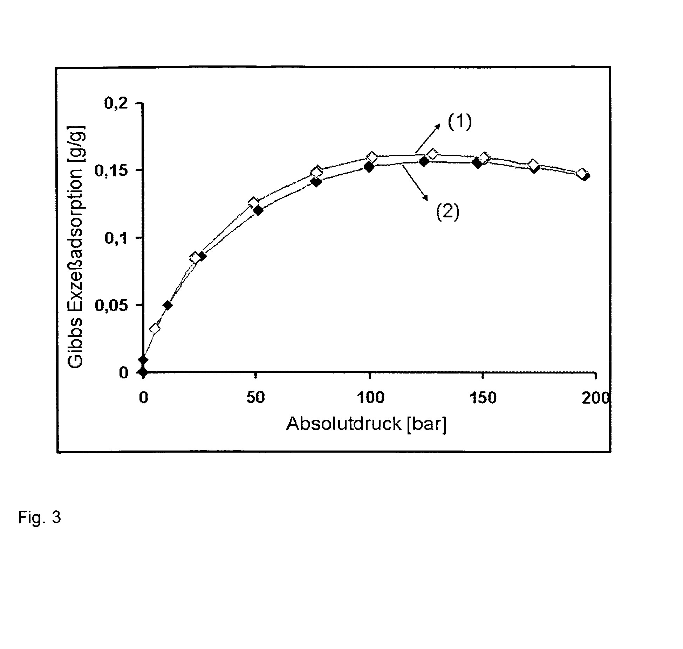

Die Hochdruck-Methan-Sorptionsmessung (siehe Fig.3) erfolgt mit Hilfe einer Magnetschwebewaage (Fa. Rubotherm Co.) *[siehe* Senkovska, Kaskel, Microporous Mesoporous Materials, 2008, 112, 108-115*]*

Bisherige Synthesen mikroporöser Polykondensationsnetzwerke ermöglichen keinen gezielten Aufbau von spezifischen Porengeometrien bei einer insgesamt hohen spezifischen Oberfläche von ≥ 2000 m²/g. Der Grund hierfür besteht in der Unlöslichkeit der sich während der Vernetzung bildenden Polymerkondensationsnetzwerke. Dieser Prozess ist unter den gegebenen Reaktionsbedingungen so schnell, dass die Isolierung von nanopartikulären Polykondensationsnetzwerken nicht erfolgen kann. Für den gezielten Aufbau einer spezifischen Porengeometrie ist allerdings die Isolierung der nanopartikulären Polykondensationsnetzwerke wichtig.

Ein weiterer Gegenstand der vorliegenden Erfindung ist daher ein nanopartikuläres Polykondensationsnetzwerk erhältlich durch Polykondensation eines oder mehrerer aromatischer, bifunktioneller Friedel-Crafts-aktiver Monomere mit mindestens einer Lewis-Säure bei einer Temperatur ≤ 30°C innerhalb von 1 bis 90 Minuten, vorzugsweise 1 bis 60 Minuten.

In Abhängigkeit von den Reaktionsbedingungen (Reaktionszeit, Monomer: Lewis-Säure-Verhältnis, Reaktionstemperatur) können nanopartikuläre Polykondensationsnetzwerke mit einem Partikeldurchmesser von 1 bis 1000 nm, bevorzugt 5 bis 500nm, besonders bevorzugt 10 bis 200 nm hergestellt werden.

Dazu ist es erfindungsgemäß bevorzugt, wenn die Reaktion bzw. Umsetzung zum nanopartikulären Polykondensationsnetzwerk bei einem Molverhältnis Monomer: Lewis-Säure von 1:1 bis 1:100, bevorzugt 1:10 bis 1:80, besonders bevorzugt 1:30 bis 1:70 erfolgt.

Die Reaktionstemperatur beträgt ≤ 30°C, vorzugsweise 15 bis 25°C, noch bevorzugter 20 bis 23°C. Vorzugsweise wird die Reaktion unter Inertgasatmosphäre (z.B. Argon-Atmosphäre) durchgeführt.

Um die nanopartikulären Polykondensationsnetzwerke aus der Reaktionslösung zu isolieren, werden diese in definierten Zeitabständen zwischen 1 und 90 Minuten, vorzugsweise 1 und 60 Minuten, abgetrennt und mit Basen (wie z.B. KOH) versetzt, damit die weitere Polykondensations-Reaktion gestoppt wird.

Als Basen zur Unterbrechung der Polykondensation kommen NaOH, KOH, Natriumethanolat (NaOEt), Kaliumtertbutylat (KOtBu) oder Amine wie NH₃, Ethylamin, Diethylamin oder Triethylamin in Frage. Bevorzugt werden NaOH oder KOH eingesetzt. Die Basen werden erfindungsgemäß in Konzentrationen zwischen 0,1 und 2 Mol/l, vorzugsweise zwischen 0.8 und 1,5 Mol/l eingesetzt.

Im Vergleich zu den ausgedehnten Polykondensationsnetzwerken besitzen die nanopartikulären Polykondensationsnetzwerke aufgrund ihrer noch nicht vollständig vernetzten Struktur nur eine geringe spezifische Oberfläche von < 200 m²/g, vorzugsweise <50 m²/g, noch bevorzugter <10 m²/g. Somit können sie als Membran, molekulares Trägersystem oder Trennmaterial für die Ionenaustauschchromatographie eingesetzt werden.

Unter dem Begriff "ausgedehntes Polykondensationsnetzwerk" ist erfindungsgemäß ein hochvernetztes Polymer zu verstehen, dass
- eine spezifische Oberfläche (nach BET) ≥ 2000 m²/g besitzt und dadurch eine signifikante Speicherdichte für Gase (z.B. Methan, Wasserstoff) besitzt,
- aufgrund seiner hohen Vernetzungsdichte (>10⁻³ mol/cm³) fast nicht quellbar ist,
- bei einer Reaktionstemperatur ≤ 75°C hergestellt wird,
- mit einem Monomer: Lewis-Säure-Verhältnis von 1:4 bis 10:1 hergestellt wird.
- innerhalb einer Reaktionszeit ≤ 6 h hergestellt wird.

Unter dem Begriff "nanopartikuläre Polykondensationsnetzwerke" sind erfindungsgemäß Nanopartikel zu verstehen, die
- aufgrund ihrer noch nicht vollständigen vernetzten Struktur nur eine geringe spezifische Oberfläche < 200 m²/g besitzen
- aufgrund ihrer geringen Vernetzungsdichte (<10⁻⁴ mol/cm³) quellbar sind.
- Partikeldurchmesser von 1 bis 1000 nm aufweisen
- bei einer Reaktionstemperatur ≤ 30°C hergestellt werden.
- mit einem Monomer: Lewis-Säure-Verhältnis von 1:1 bis 1:100 hergestellt werden
- innerhalb einer Reaktionszeit von 1 bis 90 Minuten hergestellt werden.

Weiterhin betrifft die vorliegende Erfindung eine Vorrichtung zur Aufnahme und/oder zum Speichern und/oder zur Abgabe von mindestens einem Gas, enthaltend das erfindungsgemäße ausgedehnte Polykondensationsnetzwerk.

Die erfindungsgemäße Vorrichtung kann die folgenden weiteren Komponenten enthalten:
- einen Behälter, welcher das ausgedehnte Polykondensationsnetzwerk aufnimmt
- eine Öffnung, die es ermöglicht, dass das mindestens eine Gas in die oder aus der Vorrichtung gelangt.

Ein weiterer Gegenstand der vorliegenden Erfindung ist eine stationäre oder mobile oder mobil tragbare Einrichtung, die die erfindungsgemäße Vorrichtung umfasst.

Ein weiterer Gegenstand der vorliegenden Erfindung ist die Verwendung der erfindungsgemäßen ausgedehnten Polykondensationsnetzwerke als Gasspeichermaterial. In einer bevorzugten Ausführungsform werden die erfindungsgemäßen ausgedehnten Polykondensationsnetzwerke zur Speicherung von Wasserstoff und Erdgas, vorzugsweise Methan, eingesetzt.

Ein weiterer Gegenstand der vorliegenden Erfindung ist die Verwendung der erfindungsgemäßen nanopartikulären Polykondensationsnetzwerke als Membran (z.B. in Modulen zur Meerwasserentsalzung), molekulares Trägersystem (z.B. Drug delivery oder Träger für Katalysatorzentren in der homogenen Katalyse) oder Trennmaterial (z.B. als Anionen- oder Kationenaustauscher) für die Ionenaustauschchromatographie.

Die folgenden Beispiele sollen die vorliegende Erfindung verdeutlichen. Sie sind jedoch keinesfalls als limitierend zu betrachten. Alle Verbindungen oder Komponenten, die in den Zubereitungen verwendet werden können, sind entweder bekannt und käuflich erhältlich oder können nach bekannten Methoden synthetisiert werden. Die in den Beispielen angegebenen Temperaturen gelten immer in °C. Es versteht sich weiterhin von selbst, dass sich sowohl in der Beschreibung als auch in den Beispielen die zugegebenen Mengen der Komponenten in den Zusammensetzungen immer zu insgesamt 100% addieren. Gegebene Prozentangaben sind immer im gegebenen Zusammenhang zu sehen. Sie beziehen sich üblicherweise aber immer auf die Masse der angegebenen Teil- oder Gesamtmenge.

### Beispiele

### Beispiel 1: Herstellung der ausgedehnten Polykondensationsnetzwerke auf Basis von 4,4'- Bis(chlormethyl)-1,1'-biphenyl (BCMBP)

In einem 250 ml Dreihalskolben - ausgestattet mit Rückflusskühler, KGP-Rührer und Vakuum-Rührhülse - werden 10,0 g (39,8 mmol) des Monomers BCMBP in 50 ml Dichlormethan (destilliert) gelöst und die Apparatur im Argon-Strom inertisiert. Dies entspricht einer Monomermassenkonzentration von 200 mg/ml (20,0 Gew/Vol.%). Anschließend werden 6,458 mg (39,8 mmol) des Katalysator FeCl₃ in 4 ml Dichlormethan angeschlämmt und schnellstmöglich zur Reaktionsmischung bei einer Rührgeschwindigkeit von 330 U/min zugegeben. Anschließend wird die Reaktionsmischung auf 40°C Ölbadtemperatur geheizt (Innentemperatur des Reaktionsgemisches 35 - 40 °C) und für 5 h bei dieser Temperatur geführt. Das Ausfallen eines schwarz-braunen Niederschlags ist zu beobachten. Nach beendigter Reaktion wird auf Raumtemperatur abgekühlt und der Niederschlag auf einer Nutsche gewaschen (1000 ml Wasser, 1000 ml Methanol und 500 ml t-Butylmethylether), bis die ablaufende Mutterlauge farblos ist. Anschließend wird abgesaugt und im Trockenschrank unter Vakuum bei 80°C für 24 h bis zur Massekonstanz getrocknet.

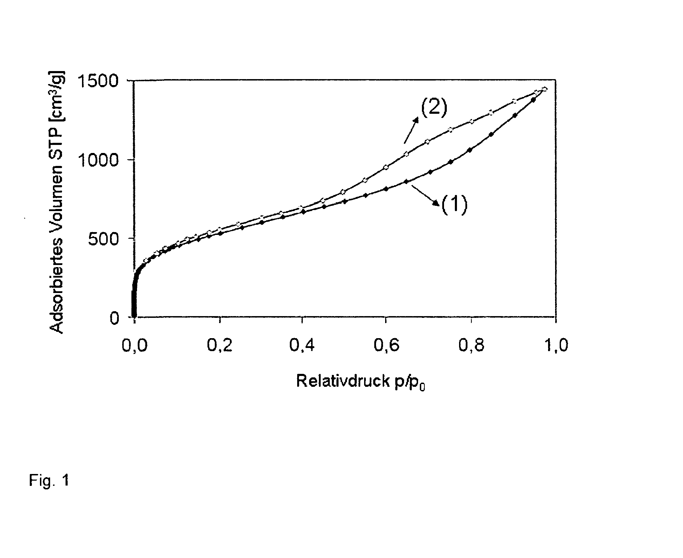

Zur Bestimmung der spezifischen Oberfläche nach der BET-Methode (Brunauer, Emmett, Teller, J. Am. Chem. Soc 1938, 60, 309) wird die Probe für 5 h bei 200°C im Vakuum ausgeheizt, um mögliche Restfeuchtigkeit aus dem Netzwerk zu entfernen. Anschließend wird die Oberfläche nach der oben genannten BET-Methode (sog. 5-Punkt-Methode, Fa. Micromeritics, ASAP 2420) zu 2473 m²/g bestimmt. Fig. 1 zeigt die zugehörige Stickstoff-Sorptionsisotherme.

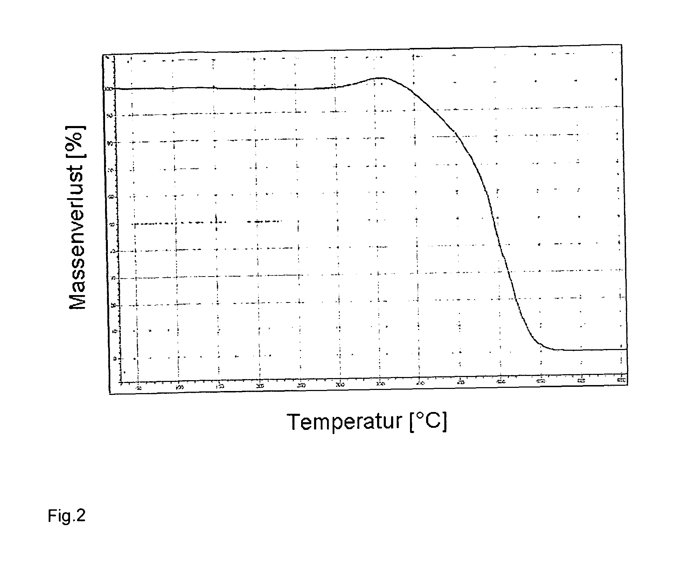

Die thermogravimetrische Analyse des o.g. Polykondensationsnetzwerks erfolgte unter Sauerstoff, wobei es eine Temperaturbeständigkeit bis 350°C zeigt. Die Messung erfolgt im Messtiegel in Differenzwägung zu einem leeren Tiegel (Water, TA Instruments) unter Luftsauerstoff bei Heizrate: 10K/min, 20-800 °C). (siehe Fig. 2)

Die Hochdruck-Methan-Sorptionsmessung (siehe Fig. 3) erfolgt mit Hilfe einer Magnetschwebewaage (Fa. Rubotherm Co) *[siehe* Senkovska, Kaskel, Microporous Mesoporous Materials 2008, 112, 108-115*].*

### Beispiel 2: Herstellung der nanopartikulären Polykondensationsnetzwerke auf Basis von 4,4'- Bis(chlormethyl)-1,1'-biphenyl (BCMBP)

### 2.1 Herstellung der FeCl₃/DCE-Stammlösung

In einem 1000 ml Erlenmeyer (mit Argon gespült) werden 500ml 1,2-Dichlorethan (destilliert und über Molsieb) vorgelegt und 600 mg FeCl₃ unter Rühren zugegeben. Die Suspension wird für 5 h unter Argon-Atmosphäre gerührt, um den Katalysator im Lösungsmittel ausreichend zu lösen. Anschließend wird das überschüssige FeCl₃ abfiltriert und die Lösung unter Argon in einem Schlenkkolben aufbewahrt. Die Bestimmung des Feststoffgehalts der Lösung wird bei 110 °C über Nacht im Vakuum-Trockenschrank durchgeführt. Der Feststoffgehalt an FeCl₃ beträgt 0,1 Gew.-%.

### 2.2 Herstellung der nanopartikulären Polykondensationsnetzwerke

In einem mit Argon gespülten 1 L Dreihalskolben - ausgestattet mit Rührfisch und Rückflusskühler - werden 20,0 g (79.6 mmol/l) des Monomers 4,4'-Bis(chlormethyl)-1,1'-biphenyl (BCMBP) in 144 ml 1,2-Dichlorethan unter Rühren (300 U/min) gelöst (10 Gew.%ige Lösung). Es liegt eine schwach gelbe, klare Lösung vor. Die Apparatur wird über den Kühler mit Argon inertisiert. Anschließend werden bei Raumtemperatur 264,7 ml (entspricht 2,5 mol-% der FeCl₃/DCE-Stammlösung bezogen auf 79.6 mmol des eingesetzten Monomers; entspricht 2,04 mmol FeCl₃) der zuvor hergestellten FeCl₃/DCE-Stammlösung so schnell wie möglich in einer Portion zugegeben. Nach beendigter Zugabe beginnt die Zeitmessung. Während der Reaktion färbt sich die Reaktionslösung von zu anfangs schwach gelb und klar über grün und später grün/schwarz. Ab einer Reaktionszeit von 61 min wird die Reaktionslösung fest.

### Beispiele 3 bis 10:

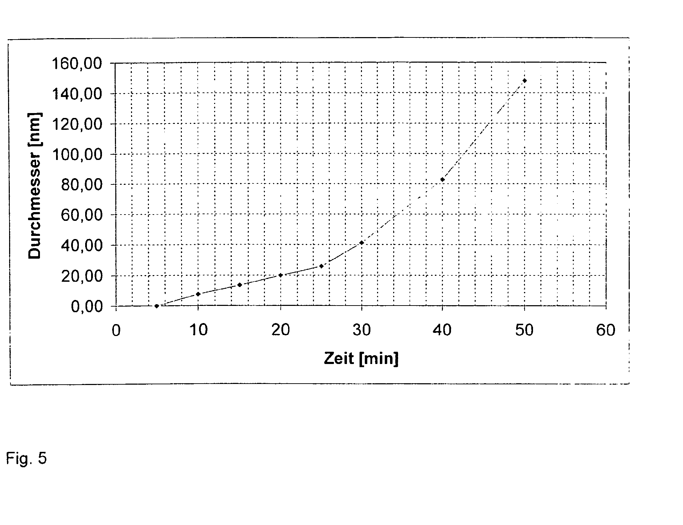

In den Beispielen 3 bis 10 werden in definierten Zeitintervallen nanopartikuläre Polykondensationsnetzwerke isoliert, die steigende Partikeldurchmesser aufweisen (siehe auch Fig. 5).

Dazu wird mit einer Pipette jeweils 4ml der Reaktionslösung (hergestellt nach Beispiel 2) entnommen und zu jeweils 8 ml wässriger Natriumhydroxid-Lösung (1mol/l) gegeben und kräftig durchmischt. Der Katalysator wird dadurch als Hydroxid in der Grenzfläche zwischen der wässrigen und der organischen Phase ausgefällt. Mit fortlaufender Reaktionszeit ist eine Trübung der organischen Phase zu beobachten. Anschließend wird mit einem Scheidetrichter die organische Phase von der wässrigen getrennt.

| Beispiel | Reaktionszeit [min] | Partikeldurchmesser der nanopartikulären Polykondensationsnetzwerke [nm] |
|---|---|---|
| 3 | 5 | 1 |
| 4 | 10 | 10 |
| 5 | 15 | 18 |
| 6 | 20 | 20 |
| 7 | 25 | 25 |
| 8 | 30 | 40 |
| 9 | 40 | 85 |
| 10 | 50 | 150 |

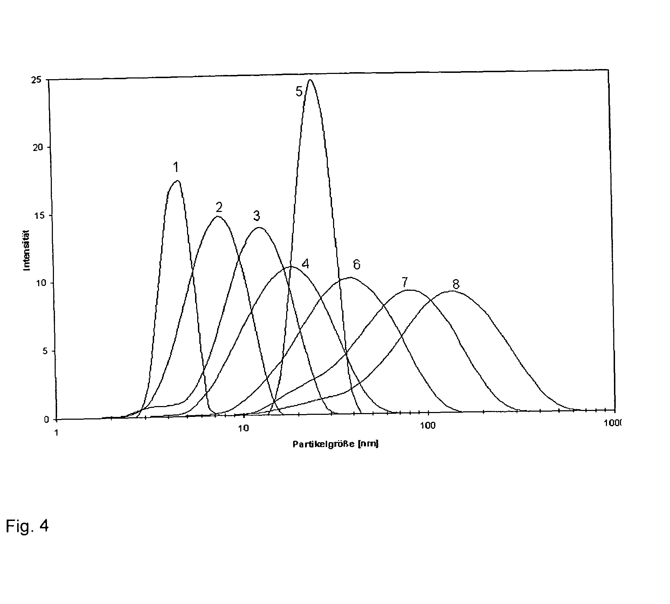

Die erhaltenen nanopartikulären Polykondensationsnetzwerke aus den Beispielen 3 bis 10 werden mit dynamischer Lichtstreuung (DLS) charakterisiert (siehe Fig. 4 und 5).

Für die Messungen zur Partikelgrößenverteilung mit DLS wird ein Zetasizer NanoZS der Fa. Malvern verwendet. Die Messungen werden in Glasküvetten mit 1,2-Dichlorethan als Lösungsmittel durchgeführt.

### Abbildungsverzeichnis

Fig. 1: Stickstoff-Sorptionsisotherme des Polykondensationsnetzwerks gemäß Beispiel 1 (Absorption: (1); Desorption: (2))
Fig. 2: Thermogravimetrische Analyse des Polykondensationsnetzwerks unter Sauerstoff nach Beispiel 1, welches eine Temperaturbeständigkeit bis 350 °C zeigt. Die Messung erfolgt im Messtiegel in Differenzwägung zu einem leeren Tiegel (Water, TA Instruments) unter Luftsauerstoff; Heizrate: 10 K/min, 20-800°C)
Fig. 3: Sorptionsisotherme von Methan des Polykondensationsnetzwerks nach Beispiel 1 (Absorption: (2); Desorption: (1)) Die Hochdruck-Methan-Sorptionsmessung erfolgt mit Hilfe einer Magnetschwebewaage (Fa. Rubotherm Co) *[siehe* Senkovska, Kaskel, Microporous Mesoporous Materials 2008, 112, 108-115*]*
Fig. 4: zeigt die Intensitätsverteilungen der verschiedenen nanopartikulären Polykondensationsnetzwerke hergestellt nach Beispiel 2, die mit dynamischer Lichtstreuung (DLS) gemessen wurden. Mit fortschreitender Reaktionszeit nimmt die Partikelgröße der nanopartikulären Polykondensationsnetzwerke zu und die Verteilungen werden breiter. Es bedeuten: 1= nach 5 Minuten Reaktionszeit; 2= nach 10 Min.; 3= nach 15 Min.; 4= nach 20 Min.; 5= nach 25 Min.; 6= nach 30 Min.; 7 = nach 40 Min.; 8= nach 50 Min.
Fig. 5: zeigt den Partikeldurchmesser der nanopartikulären Polykondensationsnetzwerke (hergestellt nach Beispiel 2) aus der Intensitätsverteilung gegen die Zeit der Probenentnahme (mittels DLS). Die Größe der Partikel nimmt exponentiell mit fortschreitender Reaktionszeit zu (Maxima aus den Intensitätsverteilungen).

## Patentansprüche

1. Verfahren zur Polykondensation, wobei ein oder mehrere aromatische bifunktionelle Friedel-Crafts-aktive Monomere in mindestens einem organischen oder anorganischen Lösungsmittel gelöst und mit mindestens einer Lewis-Säure (Katalysator) versetzt werden, **dadurch gekennzeichnet, dass** die Reaktion bei einer Temperatur ≤ 75 °C durchgeführt wird.

2. Verfahren nach Anspruch 1, **dadurch gekennzeichnet, dass** die Reaktionszeit ≤ 6 Stunden beträgt.

3. Verfahren nach Anspruch 1 und/oder 2, **dadurch gekennzeichnet, dass** als aromatisches bifunktionelles Friedel-Crafts-aktives Monomer ein alkylhalogenid-bisubstituiertes Friedel-Crafts-aktives Monomer eingesetzt wird.

4. Verfahren nach einem oder mehreren der Ansprüche 1 bis 3, **dadurch gekennzeichnet, dass** als alkylhalogenid-bisubstituiertes Friedel-Crafts-aktives Monomer eine Verbindung der allgemeinen Formel I
Y-Ar-Z (I)
wobei
Ar aromatische Systeme wie Benzol-Reste, Biphenyl-Reste, kondensierte aromatische Ringsysteme wie Naphthalin-Reste, Anthracen-Reste, Fluoren-Reste, Phenanthren-Reste, Tetracen-Reste, Pyren-Reste, wobei die aromatischen Systeme jeweils auch ein-oder mehrfach substituiert sein können Y und Z unabhängig voneinander Alkylhalogenid-Reste, vorzugsweise Alkylchlorid-Reste sein können. eingesetzt wird.

5. Verfahren nach einem oder mehreren der Ansprüche 1 bis 4, **dadurch gekennzeichnet, dass** das Monomer 4,4'-Bis(chlormethyl)-1,1'-biphenyl, 1,4-Bis(chlormethyl) benzol und/oder 9,10-Bis(chlormethyl)anthracen, vorzugsweise 4,4'-Bis(chlormethyl)-1,1'-biphenyl ist.

6. Verfahren nach einem oder mehreren der Ansprüche 1 bis 5, **dadurch gekennzeichnet, dass** als Lewis-Säure (Katalysator) FeCl₃, AlCl₃, ZnCl₂ oder SnCl₄ oder deren Gemische eingesetzt werden.

7. Verfahren nach einem oder mehreren der Ansprüche 1 bis 6, **dadurch gekennzeichnet, dass** als organisches oder anorganisches Lösungsmittel chlorierte Lösungsmittel wie 1,2-Dichlormethan und/oder Salzschmelzen, vorzugweise ionische Flüssigkeiten auf Basis von substituierten Imidazolin-, Pyrrolidinium- oder Pyrdiniumsalzen eingesetzt werden.

8. Verfahren nach einem oder mehreren der Ansprüche 1 bis 7, **dadurch gekennzeichnet, dass** die Reaktion bei einer Temperatur von 30 bis 50°C durchgeführt wird.

9. Verfahren nach einem oder mehreren der Ansprüche 1 bis 8, **dadurch gekennzeichnet, dass** die Reaktion bei einem Molverhältnis Monomer: Lewis-Säure von 1:4 bis 10:1, bevorzugt 1:3 bis 5:1, besonders bevorzugt 1:2 bis 2:1 durchgeführt wird.

10. Verfahren nach einem oder mehreren der Ansprüche 1 bis 7, **dadurch gekennzeichnet, dass** die Polykondensation bei einer Temperatur ≤ 30°C innerhalb 1 bis 90 Min. durchgeführt wird.

11. Verfahren nach Anspruch 10, **dadurch gekennzeichnet, dass** die Polykondensation durch Zugabe einer Lauge nach 1 bis 90 min. unterbrochen wird und nanopartikuläre Polykondensationsnetzwerke isoliert werden.

12. Verfahren nach Anspruch 10 und/oder 11, **dadurch gekennzeichnet, dass** die Reaktion bei einem Molverhältnis Lewis-Säure: Monomer von etwa 1:1 1 bis 1:100, bevorzugt von 1:10 bis 1:80, besonders bevorzugt von 1:30 bis 1:70 durchgeführt wird.

13. Nanopartikuläre Polykondensationsnetzwerke erhältlich durch Polykondensation eines oder mehrerer aromatischer, bifunktioneller Friedel-Crafts-aktiver Monomere mit mindestens einer Lewis-Säure bei einer Temperatur ≤30°C innerhalb von 1 bis 90 Minuten.

14. Nanopartikuläre Polykondensationsnetzwerke nach Anspruch 13, **dadurch gekennzeichnet, dass** sie in Abhängigkeit von der Reaktionszeit einen mittleren Partikeldurchmesser von 1 bis 1000 nm, bevorzugt 5 bis 500 nm, besonders bevorzugt 10 bis 200 nm aufweisen.

15. Ausgedehnte Polykondensationsnetzwerke erhältlich durch Umsetzung eines oder mehrerer aromatischer, bifunktioneller Friedel-Crafts-aktiver Monomere mit einer Lewis-Säure bei einer Temperatur ≤ 75°C.

16. Ausgedehnte Polykondensationsnetzwerke nach Anspruch 15, **dadurch gekennzeichnet, dass** die Reaktionszeit ≤ 6 Stunden beträgt.

17. Ausgedehnte Polykondensationsnetzwerke nach Anspruch 15 oder 16, **dadurch gekennzeichnet, dass** sie eine spezifische Oberfläche (nach BET) ≥ 2000 m²/g besitzen.

18. Ausgedehnte Polykondensationsnetzwerke nach einem oder mehreren der Ansprüche 15 bis 17, **dadurch gekennzeichnet, dass** die gravimetrische Speicherdichte ≥ 6.0 mmol/g Methan (35 bar) beträgt.

19. Vorrichtung zur Aufnahme und/oder zum Speichern und/oder zur Abgabe von mindestens einem Gas, enthaltend ein ausgedehnte Polykondensationsnetzwerke nach einem oder mehreren der Ansprüche 15 bis 18 oder ausgedehnte Polykondensationsnetzwerke hergestellt nach einem Verfahren nach einem oder mehreren der Ansprüche 1 bis 9.

20. Vorrichtung nach Anspruch 19, weiter enthaltend: einen Behälter, welcher das Polykondensationsnetzwerk aufnimmt; mindestens eine Öffnung, die es ermöglicht, dass das mindestens eine Gas in die oder aus der Vorrichtung gelangt.

21. Stationäre oder mobile oder mobil tragbare Einrichtung enthaltend eine Vorrichtung nach Anspruch 19 und/ oder 20.

22. Verwendung von ausgedehnten Polykondensationsnetzwerken nach Anspruch 15 bis 18 oder hergestellt nach einem Verfahren nach einem oder mehreren der Ansprüche 1 bis 9 als Speichermedium für Gase.

23. Verwendung von nanopartikulären Polykondensationsnetzwerken nach einem oder mehreren der Ansprüche 13 und/oder 14 oder hergestellt nach einem Verfahren nach einem oder mehreren der Ansprüche 10 bis 12 als Membran, molekulares Trägersystem oder Trennmaterial für die Ionenaustauschchromatographie.
